(19) Europäisches Patentamt
European Patent Office
Office européen des brevets

(11) **EP 3 778 287 B1**

(12) **EUROPÄISCHE PATENTSCHRIFT**

(45) Veröffentlichungstag und Bekanntmachung des Hinweises auf die Patenterteilung:
**24.08.2022  Patentblatt 2022/34**

(21) Anmeldenummer: **20185624.2**

(22) Anmeldetag: **14.07.2020**

(51) Internationale Patentklassifikation (IPC):
**B60L 15/20** *(2006.01)*

(52) Gemeinsame Patentklassifikation (CPC):
**B60L 15/2027;** B61L 3/008; Y02T 10/64; Y02T 10/72

(54) **VERFAHREN ZUR GESCHWINDIGKEITSREGELUNG EINES SCHIENENFAHRZEUGS**

METHOD FOR CONTROLLING THE SPEED OF A RAILWAY VEHICLE

PROCÉDÉ DE RÉGULATION DE LA VITESSE D'UN VÉHICULE FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2019  DE 102019212179**

(43) Veröffentlichungstag der Anmeldung:
**17.02.2021  Patentblatt 2021/07**

(73) Patentinhaber: **Siemens Mobility GmbH 81739 München (DE)**

(72) Erfinder: **Brückner, Nils 10405 Berlin (DE)**

(56) Entgegenhaltungen:
**DE-A1- 4 341 585     DE-A1- 19 547 716 DE-U1- 9 319 830**

**Beschreibung**

Die Erfindung betrifft ein Verfahren zur Geschwindigkeitsregelung eines Schienenfahrzeugs, einen korrespondierenden Geschwindigkeitsregler, ein Verfahren zur Regelung einer Bremse des Schienenfahrzeugs, einen korrespondierenden Bremsregler und ein korrespondierendes Schienenfahrzeug.

Bei Bremsregelungen für lokbasierte Züge mittels träger, nicht-linear wirkender Bremsen wie etwa indirekten Bremsen führen größere Regelabweichungen oft zu instabilem Verhalten. Grund dafür ist das regelungstechnisch ungünstige statische und dynamische Verhalten der Zugbremse (indirekte Bremse).

Eine Aufgabe, die der Erfindung zugrunde liegt, ist es, ein Verfahren zur Geschwindigkeitsregelung eines Schienenfahrzeugs sowie einen korrespondierenden Geschwindigkeitsregler, ein Verfahren zur Regelung einer Bremse des Schienenfahrzeugs, einen korrespondierenden Bremsregler und ein korrespondierendes Schienenfahrzeug zu schaffen, durch das bzw. durch die zu einer stabilen bzw. robusten Regelung bei trägen, nicht-linear wirkenden Bremsen beigetragen werden kann.

Die Aufgabe wird gelöst durch die unabhängigen Patentansprüche. Vorteilhafte Ausgestaltungen sind in den Unteransprüchen gekennzeichnet.

Gemäß einem ersten Aspekt betrifft die Erfindung ein Verfahren zur Geschwindigkeitsregelung eines Schienenfahrzeugs.

Bei dem Verfahren wird ein Geschwindigkeitsfehlerkennwert bereitgestellt, der repräsentativ ist für eine Abweichung zwischen einer momentanen Geschwindigkeit des Schienenfahrzeugs und einer vorgegebenen Geschwindigkeit des Schienenfahrzeugs.

Diese Abweichung kann auch als Geschwindigkeitsfehler bezeichnet werden.

Ferner wird ein Beschleunigungsfehlerkennwert bereitgestellt, der repräsentativ ist für eine Abweichung zwischen einer momentanen Beschleunigung des Schienenfahrzeugs und einer vorgegebenen Beschleunigung des Schienenfahrzeugs. Diese Abweichung kann auch als Beschleunigungsfehler bezeichnet werden.

Abhängig von dem Geschwindigkeitsfehlerkennwert wird ein Geschwindigkeitsfehlerfaktor ermittelt, durch den der Geschwindigkeitsfehlerkennwert auf einen Wertebereich zwischen einschließlich 0 und einschließlich 1 abgebildet ist.

Abhängig von einer Multiplikation des Geschwindigkeitsfehlerfaktors mit dem Beschleunigungsfehlerkennwert wird ein Korrekturkennwert ermittelt. Der Geschwindigkeitsfehlerfaktor dient in anderen Worten als Gewichtung des Beschleunigungsfehlers.

Eine Summe aus dem Korrekturkennwert und dem Geschwindigkeitsfehlerkennwert wird einem I-Regler eingangsseitig zugeführt. Am Eingang des I-Reglers liegen also ein je nach Geschwindigkeitsfehler gewichteter Beschleunigungsfehler sowie der Geschwindigkeitsfehler an. Die Gewichtung erfolgt insbesondere derart, dass der Korrekturkennwert bei verschwindendem Geschwindigkeitsfehler am größten ist und mit zunehmendem Geschwindigkeitsfehler kleiner wird.

Darüber hinaus wird der Geschwindigkeitsfehlerkennwert einem P-Regler eingangsseitig zugeführt. Eine Summe aus einem am Ausgang des I-Reglers anliegenden Kennwert sowie aus einem am Ausgang des P-Reglers anliegenden Kennwert wird als Stellgröße zur Geschwindigkeitsregelung des Schienenfahrzeugs ausgegeben.

Mit Vorteil kann durch Berücksichtigung des Beschleunigungsfehlers bei Einsatz des Verfahrens in einem Bremsregler zur Stabilität der Regelung beigetragen und eine Schwingneigung des Bremsreglers gesenkt werden.

In einer vorteilhaften Ausgestaltung gemäß dem ersten Aspekt wird der Geschwindigkeitsfehlerfaktor gemäß

$$f1 = \begin{cases} 0 & wenn\ (1 - |e_v|) \leq 0 \\ 1 - |e_v| & wenn\ 1 \leq (1 - |e_v|) > 0 \end{cases}$$

ermittelt.

In einer weiteren vorteilhaften Ausgestaltung gemäß dem ersten Aspekt wird der Korrekturkennwert durch Multiplikation des Geschwindigkeitsfehlerfaktors mit dem Beschleunigungsfehlerkennwert und einem vorgegebenen Reglerparameter ermittelt.

In einer weiteren vorteilhaften Ausgestaltung gemäß dem ersten Aspekt weisen der P-Regler eine Verstärkung $K_P$, und der I-Regler eine Verstärkung $K_P/T_N$ auf. $T_N$ bezeichnet hierbei eine Nachstellzeit.

Gemäß einem zweiten Aspekt betrifft die Erfindung einen Geschwindigkeitsregler für ein Schienenfahrzeug. Der Geschwindigkeitsregler ist eingerichtet, ein Verfahren gemäß dem ersten Aspekt auszuführen.

Gemäß einem dritten Aspekt betrifft die Erfindung ein Verfahren zur Regelung einer Bremse eines Schienenfahrzeugs.

Bei dem Verfahren wird ein Istbeschleunigungskennwert bereitgestellt, der repräsentativ ist für eine momentane Beschleunigung des Schienenfahrzeugs. Die momentane Beschleunigung kann auch als Istbeschleunigung bezeichnet werden.

Ferner wird ein Istgeschwindigkeitskennwert bereitgestellt, der repräsentativ ist für eine momentane Geschwindigkeit des Schienenfahrzeugs. Die momentane Geschwindigkeit kann auch als Istgeschwindigkeit bezeichnet werden.

Darüber hinaus wird ein Istwegkennwert bereitgestellt, der repräsentativ ist für einen zurückgelegten Weg des Schienenfahrzeugs bezüglich eines Referenzpunkts. Der zurückgelegte Weg kann auch als Istweg bezeichnet werden. Bei dem Referenzpunkt kann es sich beispielsweise um einen Ort handeln, an dem sich das Schienenfahrzeug bzw. ein vorgegebener Abschnitt des Schienenfahrzeugs zum Startzeitpunkt der Regelung befindet.

Überdies wird ein Sollwegkennwert bereitgestellt, der repräsentativ ist für einen zurückzulegenden Weg des Schienenfahrzeugs bezüglich des Referenzpunkts. Der Referenzpunkt kann beispielsweise ein Haltepunkt oder ein Startpunkt sein, an dem eine Fahrteinschränkung (Langsamfahrstelle) beginnt. Der zurückzulegende Weg kann auch als Sollweg bezeichnet werden. Hierbei kann es sich insbesondere um eine Entfernung handeln, bis zu welcher das Schienenfahrzeug bzw. der vorgegebene Abschnitt des Schienenfahrzeugs zum Stillstand gelangen soll.

Schließlich wird eine Solltrajektorie bereitgestellt, die repräsentativ ist für einen vorgegebenen Geschwindigkeitsverlauf des Schienenfahrzeugs in Abhängigkeit von dem zurückgelegten Weg des Schienenfahrzeugs sowie einen vorgegebenen Beschleunigungsverlauf des Schienenfahrzeugs in Abhängigkeit von dem zurückgelegten Weg des Schienenfahrzeugs.

Abhängig von der Solltrajektorie und einer Differenz von dem Sollwegkennwert und dem Istwegkennwert werden ein Sollbeschleunigungskennwert und ein Sollgeschwindigkeitskennwert ermittelt. Der Sollbeschleunigungskennwert ist dabei repräsentativ für eine vorgegebene Beschleunigung des Schienenfahrzeugs. Der Sollgeschwindigkeitskennwert ist repräsentativ für eine vorgegebene Geschwindigkeit des Schienenfahrzeugs.

Es wird ein Beschleunigungsfehlerkennwert als Differenz von dem Sollbeschleunigungskennwert und dem Istbeschleunigungskennwert ermittelt. Der Beschleunigungsfehlerkennwert wird einem als P-Regler ausgebildeten Beschleunigungsregler eingangsseitig zugeführt.

Es wird ferner ein Geschwindigkeitsfehlerkennwert als Differenz von dem Sollgeschwindigkeitskennwert und dem Istgeschwindigkeitskennwert ermittelt. Der Geschwindigkeitsfehlerkennwert wird zusammen mit dem Beschleunigungsfehlerkennwert einem Geschwindigkeitsregler gemäß dem zweiten Aspekt eingangsseitig zugeführt.

Eine Summe aus einem am Ausgang des Beschleunigungsreglers anliegenden Kennwert sowie aus einem am Ausgang des Geschwindigkeitsreglers anliegenden Kennwert wird als Stellgröße zur Regelung der Bremse des Schienenfahrzeugs ausgegeben.

In vorteilhafter Weise kann durch Berücksichtigung des Beschleunigungsfehlers in dem Geschwindigkeitsregler zur Stabilität der Regelung beigetragen und eine Schwingneigung bei Durchführung des Verfahrens in einem Bremsregler gesenkt werden.

Gemäß einem vierten Aspekt betrifft die Erfindung einen Bremsregler für ein Schienenfahrzeug. Der Bremsregler ist eingerichtet, das Verfahren gemäß dem dritten Aspekt auszuführen.

Gemäß einem fünften Aspekt betrifft die Erfindung ein Schienenfahrzeug mit einem Bremsregler gemäß dem vierten Aspekt.

In einer Ausgestaltung gemäß dem fünften Aspekt handelt es sich bei der durch den Bremsregler zu regelnden Bremse um eine träge, nichtlinear wirkende Bremse.

In einer vorteilhaften Ausgestaltung gemäß dem fünften Aspekt ist die durch den Bremsregler zu regelnde Bremse als indirekte Bremse ausgebildet.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

Es zeigen:

Figur 1    eine Regelabweichung zwischen Ist- und Solltrajektorie der Geschwindigkeit eines Schienenfahrzeugs in Abhängigkeit eines zurückgelegten Wegs,

Figur 2    ein Blockschaltbild eines Bremsreglers für ein Schienenfahrzeug sowie ein Blockschaltbild des Schienenfahrzeugs, und

Figur 3    ein Blockschaltbild eines Geschwindigkeitsreglers für das Schienenfahrzeug gemäß Figur 2.

Elemente gleicher Konstruktion oder Funktion sind figurenübergreifend mit den gleichen Bezugszeichen versehen.

Eine Bremsregelung mittels indirekter Bremse kann sich bei größeren Regelabweichungen instabil verhalten. Die im Folgenden zur Regelung herangezogenen Variablen können auch als Kennwerte, bezeichnet werden, die für die entsprechenden Variablen repräsentativ sind.

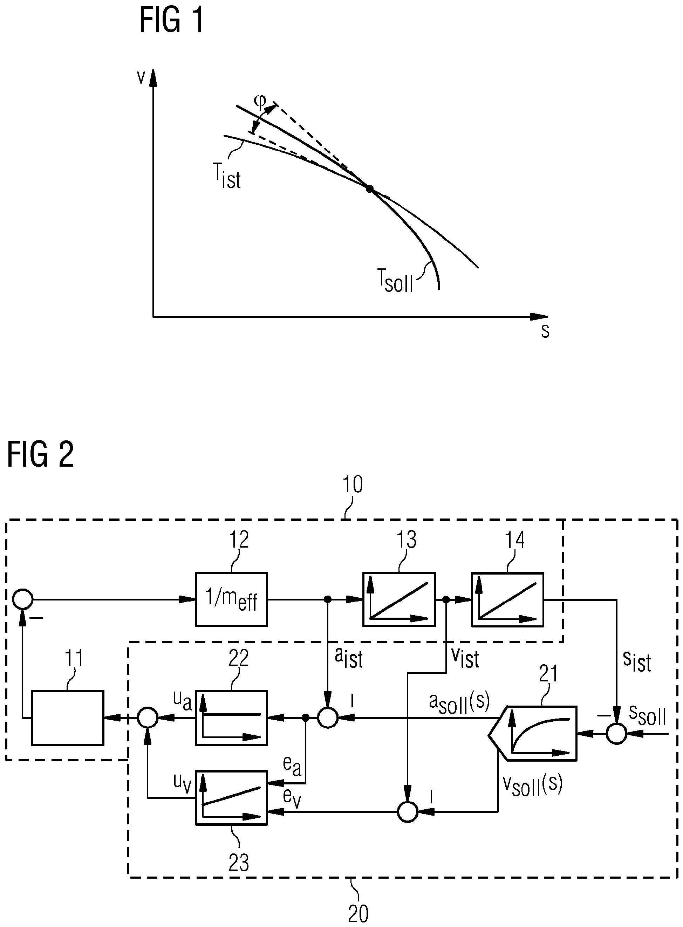

Figur 1 zeigt eine Regelabweichung zwischen einer Isttrajektorie $T_{ist}$ und einer Solltrajektorie $T_{soll}$ der Geschwindigkeit v eines Schienenfahrzeugs in Abhängigkeit eines durch das Schienenfahrzeug zurückgelegten Wegs s. Ein Kriterium für die Stabilität der Regelung ist ein Schnittwinkel φ, den die Isttrajektorie $T_{ist}$ mit der Solltrajektorie $T_{soll}$ am Schnittpunkt einschließt. Eine Schwingneigung der Regelung ist dabei umso größer, je größer der Schnittwinkel φ ist. Im Folgenden werden ein Geschwindigkeits- und ein Bremsregler angegeben, welche insbesondere bei großen Regelabweichungen beitragen, den Schnittwinkel φ gering zu halten und so einen Beitrag zu einer stabilen und robusten Regelung mit verringerter Schwingungsneigung leisten.

Bei der Isttrajektorie $T_{ist}$ und der Solltrajektorie $T_{soll}$ handelt es sich um Geschwindigkeitskurven v(s). Die Isttrajektorie $T_{ist}$ nähert sich beispielhaft der Solltrajektorie $T_{soll}$ "von unten", d.h. sie repräsentiert eine betraglich geringere (negative) Beschleunigung als die Solltrajektorie $T_{soll}$. Im Schnittpunkt der Trajektorien sind Sollgeschwindigkeit $v_{soll}$ und Istgeschwindigkeit $v_{ist}$ gleich. Der Schnittwinkel φ ist proportional zu einem Beschleunigungsfehler $e_a$ und damit ein Maß für die Schwingneigung.

Anhand Figur 2 ist ein Blockschaltbild eines Bremsreglers 20 für eine träge und/oder nicht-linear wirkende Bremse eines Schienenfahrzeugs 10 sowie ein Blockschaltbild des Schienenfahrzeugs 10 als Regelstrecke dargestellt (jeweils gestrichelt umrandet).

Das Schienenfahrzeug 10 weist eine indirekte Bremse 11 als Stellglied auf, die eingerichtet ist, eine Bremskraft auf das Schienenfahrzeug 10 auszuüben.

Block 12 repräsentiert eine effektive Masse $m_{eff}$ (berücksichtigt alle rotatorischen Trägheiten) des Schienenfahrzeugs 10, an dessen Ausgang folglich eine Istbeschleunigung $a_{ist}$ des Schienenfahrzeugs 10 anliegt.

Blöcke 13 und 14 repräsentieren Integrierer, an deren Ausgänge folglich eine Istgeschwindigkeit $v_{ist}$ bzw. ein Istweg $s_{ist}$ des Schienenfahrzeugs 10 anliegen.

Diese Messgrößen $a_{ist}$, $v_{ist}$ und $s_{ist}$ liegen zusammen mit einer Sollwertvorgabe als Führungsgröße bezüglich des durch das Schienenfahrzeug 10 zurückzulegenden Weges (nachfolgend als Sollweg $s_{soll}$ bezeichnet) eingangsseitig am Bremsregler 20 an. Bei dem Sollweg $s_{soll}$ kann es sich insbesondere um eine Vorgabe handeln, bis zu welcher Wegstrecke das Schienenfahrzeug 10 zum Stillstand kommen soll, beispielhaft im Rahmen eines teil- oder vollautomatischen Betriebs des Schienenfahrzeugs 10 (engl. "automatic train operation", ATO).

Der Bremsregler 20 umfasst eine Sollwertvorgabeeinheit 21, der zunächst eine Differenz aus Sollweg $s_{soll}$ und Istweg $s_{ist}$ zugeführt wird. Die Sollwertvorgabeeinheit 21 ist insbesondere eingerichtet, abhängig von der ermittelten Differenz eine Sollbeschleunigung $a_{soll}$ und eine Sollgeschwindigkeit $v_{soll}$ zu ermitteln und auszugeben. Beispielhaft wird in diesem Zusammenhang auf eine vorgegebene Solltrajektorie $T_{soll}$ (vgl. Fig. 1) zurückgegriffen, die etwa in der Sollwertvorgabeeinheit 21 berechnet wird oder hinterlegt ist.

Der Bremsregler 20 umfasst ferner einen Beschleunigungsregler 22 sowie einen Geschwindigkeitsregler 23. Hierbei wird dem Beschleunigungsregler 22 eine Differenz aus Istbeschleunigung $a_{ist}$ und Sollbeschleunigung $a_{soll}$ zugeführt. Diese Differenz stellt eine Regelabweichung dar und kann auch als Beschleunigungsfehler $e_a$ bezeichnet werden. Der Beschleunigungsregler 22 ist als P-Regler ausgebildet.

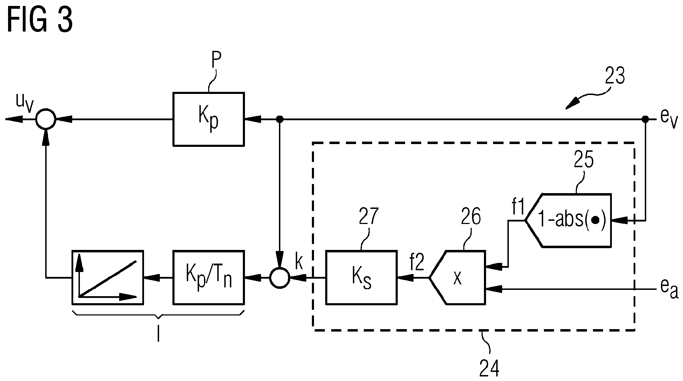

Dem Geschwindigkeitsregler 23 wird eine Differenz aus Istgeschwindigkeit $v_{ist}$ und Sollgeschwindigkeit $v_{soll}$ zugeführt. Diese Differenz stellt eine weitere Regelabweichung dar und kann auch als Geschwindigkeitsfehler $e_v$ bezeichnet werden. Der Geschwindigkeitsregler 23 ist als modifizierter PI-Regler ausgebildet, der im Unterschied zu einem herkömmlichen PI-Regler zusätzlich zu dem Geschwindigkeitsfehler $e_v$ den Beschleunigungsfehler $e_a$ zur Kontrolle des Schnittwinkels φ verarbeitet (vgl. Fig. 3).

Eine Ausgangsgröße $u_a$ des Beschleunigungsreglers 22 und eine Ausgangsgröße $u_v$ des Geschwindigkeitsreglers 23 wird addiert und dient als Stellgröße bzw. als Aktoreingang der indirekten Bremse 11.

Anhand Figur 3 ist ein Blockschaltbild des Geschwindigkeitsreglers 23 des Bremsreglers 20 mit einer Schnittwinkelkontrolleinheit 24 (gestrichelt umrandet) dargestellt.

Bei dem Geschwindigkeitsregler 23 handelt es sich ohne die Schnittwinkelkontrolleinheit 24 um einen Standard-PI-Regler. Zur Kontrolle des Schnittwinkels φ wird in Block 25 aus dem Geschwindigkeitsfehler $e_v$ ein Geschwindigkeitsfehlerfaktor f1 zur Gewichtung des Beschleunigungsfehlers $e_a$ berechnet. Hierbei ist lediglich beispielhaft eine Berechnung von $1-|e_v|$ dargestellt, deren Ergebnis nachfolgend auf einen Bereich zwischen einschließlich 0 und einschließlich 1 beschränkt wird. Alternativ kann in dem Block 25 eine andere Abbildungsfunktion eingesetzt werden, die den Geschwindigkeitsfehler $e_v$ auf vorgenannten Wertebereich abbildet.

Der Geschwindigkeitsfehlerfaktor f1 wird daraufhin in Block 26 mit dem Beschleunigungsfehler $e_a$ multipliziert. Das Ergebnis f2 der Multiplikation des Blocks 26 wird in Block 27 anschließend mit einem vorgegebenen Reglerparameter Ks multipliziert. Das Ergebnis der Multiplikation des Blocks 27 stellt einen Korrekturkennwert K dar, der additiv einem Eingang eines I-Anteils des Geschwindigkeitsreglers 23 zugeführt wird. Der I-Anteil kann auch als I-Regler I mit einem Integrator, einer Verstärkung $K_p/T_n$ bezeichnet werden. Der Geschwindigkeitsfehler $e_v$ wird ferner einem P-Anteil des Geschwindigkeitsreglers 23 zugeführt. Der P-Anteil kann auch als P-Regler P mit einer Verstärkung $K_p$ bezeichnet werden. Die Ausgangsgrößen des P-Anteils und des I-Anteils werden addiert als Stellgröße $u_v$ zur Geschwindigkeits-

regelung ausgegeben.

Durch Aufschaltung des Geschwindigkeitsfehlers $e_v$ mit dem Korrekturkennwert K erfolgt noch vor Erreichen des Schnittpunktes zwischen der Isttrajektorie $T_{ist}$ und der Solltrajektorie $T_{soll}$ eine nachhaltige Korrektur (statt einer reinen P-Regelung der Beschleunigung erfolgt eine PI-Regelung) des Beschleunigungsfehlers $e_a$. Im Ergebnis schneidet die Isttrajektorie $T_{ist}$ die Solltrajektorie $T_{soll}$ in einem spitzeren bzw. geringeren Schnittwinkel $\varphi$. Die Schwingneigung des Bremsreglers 20 wird dadurch geringer und die Stabilität der Regelung größer. Durch die Gewichtung des Beschleunigungsfehlers $e_a$ in Abhängigkeit des Geschwindigkeitsfehler $e_v$ wird sichergestellt, dass die Ablenkung der Isttrajektorie $T_{ist}$ in Richtung der Solltrajektorie $T_{soll}$ mit kleiner werdendem Geschwindigkeitsfehler $e_v$ zunimmt. Sie ist am größten, wenn der Geschwindigkeitsfehler $e_v$ verschwindet. Dadurch wird die Korrektur des Geschwindigkeitsfehlers $e_v$ für größere Abstände zwischen der Solltrajektorie $T_{soll}$ und der Isttrajektorie $T_{ist}$ nicht gestört.

Zusammenfassend kann so die Stabilität und Robustheit der Regelung erhöht werden. Dies wird erreicht durch Berechnung eines Gewichtungsfaktors (Geschwindigkeitsfehlerfaktor f1) für den Beschleunigungsfehler $e_a$ aus dem Geschwindigkeitsfehler $e_v$. Die Gewichtung erfolgt so, dass die Korrektur bei verschwindendem Geschwindigkeitsfehler $e_v$ am größten ist und mit zunehmendem Geschwindigkeitsfehler $e_v$ immer kleiner wird. Hierbei erfolgt eine Gewichtung des Beschleunigungsfehlers $e_a$ mit dem Gewichtungsfaktor und additiver Aufschaltung des Resultates auf den I-Anteil des Geschwindigkeitsreglers 23. Ferner ergibt sich eine Parametrierungsmöglichkeit durch den Reglerparameter Ks.

Der Geschwindigkeitsregler 23 bzw. der Bremsregler 20 eignen sich insbesondere für einen automatischen Fahrbetrieb (ATO) lokbasierter Züge und ermöglicht einen praktikablen Einsatz der Regelung von Zugbremsen.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

Bezugszeichen:

| | |
|---|---|
| a | Beschleunigung |
| v | Geschwindigkeit |
| s | Weg |
| e | Fehler |
| u | Stellgröße |
| $K_p$, $K_s$ | Reglerparameter |
| $T_n$ | Nachstellzeit |
| K | Korrekturkennwert |
| f1 | Geschwindigkeitsfehlerfaktor |
| f2 | Faktor |
| Tist | Isttrajektorie |
| Tsoll | Solltrajektorie |
| $\varphi$ | Schnittwinkel |
| 10 | Schienenfahrzeug |
| 11 | Bremse |
| 12-14 | Schaltblöcke |
| 20 | Bremsregler |
| 21 | Sollwertvorgabeeinheit |
| 22 | Beschleunigungsregler |
| 23 | Geschwindigkeitsregler |
| 24 | Schnittwinkelkontrolleinheit |
| 25 | Projektion |
| 26-27 | Multiplikator |
| I | I-Regler |
| P | P-Regler |

**Patentansprüche**

1. Verfahren zur Geschwindigkeitsregelung eines Schienenfahrzeugs (10), bei dem

- ein Geschwindigkeitsfehlerkennwert ($e_v$) bereitgestellt wird, der repräsentativ ist für eine Abweichung zwischen einer momentanen Geschwindigkeit ($v_{ist}$) des Schienenfahrzeugs (10) und einer vorgegebenen Geschwindigkeit ($v_{soll}$) des Schienenfahrzeugs (10),

- ein Beschleunigungsfehlerkennwert ($e_a$) bereitgestellt wird, der repräsentativ ist für eine Abweichung zwischen einer momentanen Beschleunigung ($a_{ist}$) des Schienenfahrzeugs (10) und einer vorgegebenen Beschleunigung ($a_{soll}$) des Schienenfahrzeugs (10),

- abhängig von dem Geschwindigkeitsfehlerkennwert ($e_v$) ein Geschwindigkeitsfehlerfaktor (f1) ermittelt wird, durch den der Geschwindigkeitsfehlerkennwert ($e_v$) auf einen Wertebereich [0; 1] abgebildet ist,

- abhängig von einer Multiplikation des Geschwindigkeitsfehlerfaktors (f1) mit dem Beschleunigungsfehlerkennwert ($e_a$) ein Korrekturkennwert (K) ermittelt wird, und

- eine Summe aus dem Korrekturkennwert (K) und dem Geschwindigkeitsfehlerkennwert ($e_v$) einem I-Regler (I) eingangsseitig zugeführt wird,

- der Geschwindigkeitsfehlerkennwert ($e_v$) einem P-Regler (P) eingangsseitig zugeführt wird, und

- eine Summe aus einem am Ausgang des I-Reglers (I) anliegenden Kennwert sowie aus einem am Ausgang des P-Reglers (P) anliegenden Kennwert als Stellgröße ($u_v$) zur Geschwindigkeitsregelung des Schienenfahrzeugs (10) ausgegeben wird.

2. Verfahren nach Anspruch 1, wobei

- der Geschwindigkeitsfehlerfaktor (f1) gemäß

$$f1 = \begin{cases} 0 & wenn\ (1 - |e_v|) \leq 0 \\ 1 - |e_v| & wenn\ 1 \leq (1 - |e_v|) > 0 \end{cases}$$

ermittelt wird.

3. Verfahren nach einem der vorstehenden Ansprüche, wobei

- der Korrekturkennwert (K) durch Multiplikation des Geschwindigkeitsfehlerfaktors (f1) mit dem Beschleunigungsfehlerkennwert ($e_a$) und einem vorgegebenen Reglerparameter ($K_s$) ermittelt wird.

4. Verfahren nach einem der vorstehenden Ansprüche, wobei

- der P-Regler (P) eine Verstärkung $K_P$, und der I-Regler (I) eine Verstärkung $K_p/T_N$ aufweisen.

5. Geschwindigkeitsregler (23) für ein Schienenfahrzeug (10), der eingerichtet ist, ein Verfahren nach einem der vorstehenden Ansprüche auszuführen.

6. Verfahren zur Regelung einer Bremse (11) eines Schienenfahrzeugs (10), bei dem

- ein Istbeschleunigungskennwert ($a_{ist}$) bereitgestellt wird, der repräsentativ ist für eine momentane Beschleunigung des Schienenfahrzeugs (10),

- ein Istgeschwindigkeitskennwert ($v_{ist}$) bereitgestellt wird, der repräsentativ ist für eine momentane Geschwindigkeit des Schienenfahrzeugs (10),

- ein Istwegkennwert ($s_{ist}$) bereitgestellt wird, der repräsentativ ist für einen zurückgelegten Weg des Schienenfahrzeugs (10) bezüglich eines Referenzpunkts,

- ein Sollwegkennwert ($s_{soll}$) bereitgestellt wird, der repräsentativ ist für einen zurückzulegenden Weg des Schienenfahrzeugs (10) bezüglich des Referenzpunkts,

- eine Solltrajektorie ($T_{soll}$) bereitgestellt wird, die repräsentativ ist für einen vorgegebenen Geschwindigkeitsverlauf des Schienenfahrzeugs (10) in Abhängigkeit von dem zurückgelegten Weg des Schienenfahrzeugs (10) sowie einen vorgegebenen Beschleunigungsverlauf des Schienenfahrzeugs (10) in Abhängigkeit von dem zurückgelegten Weg des Schienenfahrzeugs (10),

- abhängig von der Solltrajektorie ($T_{soll}$) und einer Differenz von dem Sollwegkennwert ($s_{soll}$) und dem Istwegkennwert ($s_{ist}$) ein Sollbeschleunigungskennwert ($a_{soll}$) und ein Sollgeschwindigkeitskennwert ($v_{soll}$) ermittelt werden, wobei der Sollbeschleunigungskennwert ($a_{soll}$) repräsentativ ist für eine vorgegebene Beschleunigung des Schienenfahrzeugs (10) und der Sollgeschwindigkeitskennwert ($v_{soll}$) repräsentativ ist für eine vorgegebene Geschwindigkeit des Schienenfahrzeugs (10),

- ein Beschleunigungsfehlerkennwert ($e_a$) als Differenz von dem Sollbeschleunigungskennwert ($a_{soll}$) und dem Istbeschleunigungskennwert ($a_{ist}$) ermittelt und einem als P-Regler ausgebildeten Beschleunigungsregler (22) eingangsseitig zugeführt wird,

- ein Geschwindigkeitsfehlerkennwert ($e_v$) als Differenz von dem Sollgeschwindigkeitskennwert ($v_{soll}$) und dem Istgeschwindigkeitskennwert ($v_{ist}$) ermittelt und zusammen mit dem Beschleunigungsfehlerkennwert ($e_a$) einem Geschwindigkeitsregler (23) gemäß Anspruch 5 eingangsseitig zugeführt wird, und

- eine Summe aus einem am Ausgang des Beschleunigungsreglers (22) anliegenden Kennwert ($u_a$) sowie aus einem am Ausgang des Geschwindigkeitsreglers (23) anliegenden Kennwert ($u_v$) als Stellgröße zur Regelung der Bremse (11) des Schienenfahrzeugs (10) ausgegeben wird.

7. Bremsregler (20) für ein Schienenfahrzeug (10), der eingerichtet ist, das Verfahren gemäß Anspruch 6 auszuführen.

8. Schienenfahrzeug (10) mit einem Bremsregler (20) nach Anspruch 7.

9. Schienenfahrzeug (10) nach Anspruch 8, wobei die durch den Bremsregler (20) zu regelnde Bremse (11) als indirekte Bremse ausgebildet ist.


**Claims**

1. Method for closed-loop control of the velocity of a rail vehicle (10), in which

- a velocity error characteristic value ($e_v$) is provided, which is representative of a deviation between an instantaneous velocity ($v_{actual}$) of the rail vehicle (10) and a predefined velocity ($v_{target}$) of the rail vehicle (10),
- an acceleration error characteristic value ($e_a$) is provided, which is representative of a deviation between an instantaneous acceleration ($a_{actual}$) of the rail vehicle (10) and a predefined acceleration ($a_{target}$) of the rail vehicle (10),
- depending upon the velocity error characteristic value ($e_v$), a velocity error factor (f1) is ascertained, by way of which the velocity error characteristic value ($e_v$) is mapped to a value range [0; 1],
- depending upon a multiplication of the velocity error factor (f1) by the acceleration error characteristic value ($e_a$), a correction characteristic value (K) is ascertained, and
- a sum of the correction characteristic value (K) and the velocity error characteristic value ($e_v$) is supplied to an integral controller (I) on the input side,
- the velocity error characteristic value ($e_v$) is supplied to a proportional controller (P) on the input side, and
- a sum of a characteristic value present at the output of the integral controller (I) and of a characteristic value present at the output of the proportional controller (P) is output as a manipulated variable ($u_v$) for closed-loop control of the velocity of the rail vehicle (10).

2. Method according to claim 1, wherein

- the velocity error factor (f1) is ascertained in accordance with

$$f1 = \begin{cases} 0 & if\ (1 - |e_v|) \leq 0 \\ 1 - |e_v| & if\ 1 \leq (1 - |e_v|) > 0 \end{cases}.$$

3. Method according to one of the preceding claims, wherein

- the correction characteristic value (K) is ascertained by multiplying the velocity error factor (f1) by the acceleration error characteristic value ($e_a$) and a predefined controller parameter ($K_s$).

4. Method according to one of the preceding claims, wherein

- the proportional controller (P) has an amplification $K_P$, and the integral controller (I) has an amplification $K_P/T_N$.

5. Velocity controller (23) for a rail vehicle (10), which is configured to carry out a method according to one of the preceding claims.

**6.** Method for closed-loop control of a brake (11) of a rail vehicle (10), in which

- an actual acceleration characteristic value ($a_{actual}$) is provided, which is representative of an instantaneous acceleration of the rail vehicle (10),
- an actual velocity characteristic value ($v_{actual}$) is provided, which is representative of an instantaneous velocity of the rail vehicle (10),
- an actual distance characteristic value ($s_{actual}$) is provided, which is representative of a distance covered by the rail vehicle (10) in relation to a reference point,
- a target distance characteristic value ($s_{target}$) is provided, which is representative of a distance covered by the rail vehicle (10) in relation to the reference point,
- a target trajectory ($T_{target}$) is provided, which is representative of a predefined velocity curve of the rail vehicle (10) as a function of the distance covered by the rail vehicle (10) as well as a predefined acceleration curve of the rail vehicle (10) as a function of the distance covered by the rail vehicle (10),
- depending upon the target trajectory ($T_{target}$) and a difference between the target distance characteristic value ($s_{target}$) and the actual distance characteristic value ($s_{actual}$), a target acceleration characteristic value ($a_{target}$) and a target velocity characteristic value ($v_{target}$) are ascertained, wherein the target acceleration characteristic value ($a_{target}$) is representative of a predefined acceleration of the rail vehicle (10) and the target velocity characteristic value ($v_{target}$) is representative of a predefined velocity of the rail vehicle (10),
- an acceleration error characteristic value ($e_a$) is ascertained as the difference between the target acceleration characteristic value ($a_{target}$) and the actual acceleration characteristic value ($a_{actual}$) and is supplied to an acceleration controller (22) embodied as a proportional controller on the input side,
- a velocity error characteristic value ($e_v$) is ascertained as the difference between the target velocity characteristic value ($v_{target}$) and the actual velocity characteristic value ($v_{actual}$) and, together with the acceleration error characteristic value ($e_a$), is supplied to a velocity controller (23) according to claim 5 on the input side, and
- a sum of a characteristic value ($u_a$) present at the output of the acceleration controller (22) as well as of a characteristic value ($u_v$) present at the output of the velocity controller (23) is output as a manipulated variable for closed-loop control of the brake (11) of the rail vehicle (10) .

**7.** Braking controller (20) for a rail vehicle (10), which is configured to carry out the method according to claim 6.

**8.** Rail vehicle (10) with a braking controller (20) according to claim 7.

**9.** Rail vehicle (10) according to claim 8, wherein the brake (11) to be closed-loop controlled by the braking controller (20) is embodied as an indirect brake.

**Revendications**

**1.** Procédé de régulation de la vitesse d'un véhicule (10) ferroviaire, dans lequel

- on met à disposition une valeur ($e_v$) caractéristique d'erreur de vitesse représentative d'un écart entre une vitesse ($v_{ist}$) instantanée du véhicule (10) ferroviaire et une vitesse ($v_{soll}$) donnée à l'avance du véhicule (10) ferroviaire,
- on met à disposition une valeur ($e_a$) caractéristique d'erreur d'accélération représentative d'un écart entre une accélération ($a_{ist}$) instantanée du véhicule (10) ferroviaire et une accélération ($a_{soll}$) donnée à l'avance du véhicule (10) ferroviaire,
- en fonction de la valeur ($e_v$) caractéristique d'erreur de vitesse, on détermine un facteur (f1) d'erreur de vitesse, par lequel la valeur ($e_v$) caractéristique d'erreur de vitesse est représentée sur une plage [0 ; 1] de valeurs,
- en fonction d'une multiplication du facteur (f1) d'erreur de vitesse par la valeur ($e_a$) caractéristique d'erreur d'accélération, on détermine une valeur (K) caractéristique de correction, et
- on envoie, du côté de l'entrée à un régleur I (I), une somme de la valeur (K) caractéristique de correction et de la valeur ($e_v$) caractéristique d'erreur de vitesse,
- on envoie, du côté de l'entrée à un régleur P (P), la valeur ($e_v$) caractéristique d'erreur de vitesse, et
- on émet, comme grandeur ($u_v$) de réglage pour le réglage de la vitesse du véhicule (10) ferroviaire, une somme d'une valeur caractéristique s'appliquant à la sortie du régleur I (I) et d'une valeur caractéristique s'appliquant à la sortie du régleur P (P).

**2.** Procédé suivant la revendication 1, dans lequel

- on détermine le facteur (f1) d'erreur de vitesse suivant.

$$f1 = \begin{cases} 0 & si \ (1 - |e_v|) \leq 0 \\ 1 - |e_v| & si \ 1 \leq (1 - |e_v|) > 0 \end{cases}$$

3. Procédé suivant l'une des revendications précédentes, dans lequel

   - on détermine la valeur (K) caractéristique de correction en multipliant le facteur (f1) d'erreur de vitesse par la valeur ($e_a$) caractéristique d'erreur d'accélération et par un paramètre ($K_S$) de régleur donné à l'avance.

4. Procédé suivant l'une des revendications précédentes, dans lequel

   - le régleur P (P) a une amplification $K_P$ et le régleur I (I) à une amplification $K_P/T_N$.

5. Régleur (23) de vitesse d'un véhicule (10) ferroviaire, qui est conçu pour effectuer un procédé suivant l'une des revendications précédentes.

6. Procédé de régulation d'un frein (11) d'un véhicule (10) ferroviaire, dans lequel

   - on met à disposition une valeur ($a_{ist}$) caractéristique d'accélération réelle représentative d'une accélération instantanée du véhicule (10) ferroviaire,
   - on met à disposition une valeur ($v_{ist}$) caractéristique de vitesse réelle représentative d'une vitesse instantanée du véhicule (10) ferroviaire,
   - on met à disposition une valeur ($s_{ist}$) caractéristique de chemin réelle représentative d'un chemin parcouru par le véhicule (10) ferroviaire par rapport à un point de référence,
   - on met à disposition une valeur ($s_{soll}$) caractéristique de trajectoire de consigne représentative d'un chemin à parcourir par le véhicule (10) ferroviaire par rapport au point de référence,
   - on met à disposition une trajectoire ($T_{soll}$) de consigne représentative d'une courbe de vitesse donnée à l'avance du véhicule (10) ferroviaire en fonction du chemin parcouru par le véhicule (10) ferroviaire, ainsi qu'une courbe d'accélération du véhicule (10) ferroviaire en fonction du chemin parcouru par le véhicule (10) ferroviaire,
   - en fonction de la trajectoire ($T_{soll}$) de consigne et d'une différence entre la valeur ($s_{soll}$) caractéristique de chemin de consigne et la valeur ($s_{ist}$) caractéristique de chemin réelle, on détermine une valeur ($a_{soll}$) caractéristique d'accélération de consigne et une valeur ($v_{soll}$) caractéristique de vitesse de consigne, la valeur ($a_{soll}$) caractéristique d'accélération de consigne étant représentative d'une accélération donnée à l'avance du véhicule (10) ferroviaire et la valeur ($v_{soll}$) caractéristique de vitesse de consigne étant représentative d'une vitesse donnée à l'avance du véhicule (10) ferroviaire,
   - on détermine une valeur ($e_a$) caractéristique d'erreur d'accélération, comme différence entre la valeur ($a_{soll}$) caractéristique d'accélération de consigne et la valeur ($a_{ist}$) caractéristique d'accélération réelle, et on l'envoie du côté de l'entrée à un régleur (22) d'accélération constitué en régleur P,
   - on détermine une valeur ($e_v$) caractéristique d'erreur de vitesse comme différence entre la valeur ($v_{soll}$) caractéristique de vitesse de consigne et la valeur ($v_{ist}$) caractéristique de vitesse réelle et on l'envoie du côté de l'entrée à un régleur (23) de vitesse suivant la revendication 5, ensemble avec la valeur ($e_a$) caractéristique d'erreur d'accélération, et
   - on émet, comme grandeur de réglage pour la régulation du frein (11) du véhicule (10) ferroviaire, une somme d'une valeur ($u_a$) caractéristique s'appliquant à la sortie du régleur (22) d'accélération, ainsi que d'une valeur ($u_v$) caractéristique s'appliquant à la sortie du régleur (23) de vitesse.

7. Régleur (20) de frein d'un véhicule (10) ferroviaire, qui est conçu pour effectuer le procédé suivant la revendication 6.

8. Véhicule (10) ferroviaire ayant un régleur (20) de frein suivant la revendication 7.

9. Véhicule (10) ferroviaire suivant la revendication 8, dans lequel le frein (11) à régler par le régleur (20) de frein est constitué sous la forme d'un frein indirect.

# FIG 1

# FIG 2

FIG 3